# EUROPEAN PATENT SPECIFICATION

(11) **EP 2 803 214 B1**
(45) Date of publication and mention of the grant of the patent: **19.02.2020**
(21) Application number: 12725139.5
(22) Date of filing: 24.05.2012
(51) Int. Cl.: H04W 4/50, H04W 4/18, G06Q 10/06

(54) **PLATFORM FOR THE DELIVERY OF CONTENT AND SERVICES TO NETWORKED CONNECTED COMPUTING DEVICES**
PLATTFORM ZUR LIEFERUNG VON INHALTEN UND DIENSTEN AN VERNETZTE VERBUNDENE RECHNERVORRICHTUNGEN
PLATEFORME POUR LA LIVRAISON DE CONTENUS ET DE SERVICES À DES DISPOSITIFS INFORMATIQUES CONNECTÉS EN RÉSEAU

(30) Priority: 24.05.2011 GB 201108709; 20.12.2011 GB 201121885
(43) Date of publication of application: 19.11.2014
(73) Proprietor: Corethree Limited, Hertfordshire WD17 2EH (GB)
(72) Inventor: KERSHAW, Richard, Watford, Hertfordshire WD17 2EH (GB); SMITH, Michael, Watford, Hertfordshire WD17 2EH (GB); MURDOCH, James, Watford, Hertfordshire WD17 2EH (GB)
(74) Representative: Langley, Peter James
(86) International application number: PCT/GB2012/051168
(87) International publication number: WO 2012/160381

(56) References cited:
- WO-A2-2009/134755
- US-A1- 2005 111 723
- US-B1- 7 743 074

## Description

### BACKGROUND OF THE INVENTION

### 1. Field of the Invention

This invention relates to a platform for the delivery of content and services to networked connected computing devices. The platform enables the rapid development and deployment of content and services to smartphones; typical services include the sale and promotion of products, the digital distribution of tickets, live information aggregated from the internet, and many other use cases.

### 2. Description of the Prior Art

There are many different platforms for the delivery of content and services to networked computing devices. Reference may be made to articles defining Service Delivery Platforms and related technologies such as LDAP. In addition, reference may be made to the many enterprise and B2C software applications that frequently use the same design patterns in their architecture, such as:
- User login
- Content management
- Location services
- Transaction auditing
- Activity monitoring
- System integration

In practice, the repeated implementation of these features for different software applications for the delivery of content and services to networked-connected computing devices is a lengthy, often complex and always time consuming process, and is especially wasteful when those essential elements are commonly duplicated between projects.

The parts of these projects that differ significantly are generally quite minor in comparison to the framework of software written to support them.

Whilst there are "toolkits" of software modules available to ease this repetitive process, they only ease this rather than eliminate it. The aim of this invention is to provide a faster, more efficient and reliable method of delivering content and services to networked connected computing devices.

WO2009134755(A2) discloses methods, systems, and apparatus, including medium-encoded computer program products, for providing an adaptive knowledge platform.

US7743074(B1) discloses context aware systems and methods utilizing hierarchical tree structures.

### SUMMARY OF THE INVENTION

According to a first aspect of the invention there is provided a system including a server and mobile phone computing devices, the mobile phone computing devices connected to the server via a network, the server including a platform configured to deliver content and services to the mobile phone computing devices, in which the content is stored as a database on the server, in which the platform stores content by arranging nodes in a hierarchical format that is capable of semantically representing content, with each node including a unique ID and in which the hierarchical format acts as an abstraction layer that insulates a content or service creator and the connected mobile phone computing devices from being restricted (i) to any specific, predefined data format for the content or (ii) to any specific, predefined transport media for exchanging data over the network, characterized in that the services include digital distribution of tickets content to the mobile phone computing devices, including the platform providing digital tickets to the connected mobile phone computing devices for them to display, the displayed digital tickets including an animated watermark, wherein the animated watermark includes a timer indicating the time available to use the ticket.

Optional, implementation features include the following:
- the data format is a generic format that is capable of representing many different types of semantic content.
- the unique ID is a unique number, such as a GUID.
- the unique ID is a unique position in a tree hierarchy.
- individual content entities are linked to a parent and one or more child nodes to enable semantic, hierarchical organisation of content.
- individual content entities are linked to a parent and one or more child nodes to enable visual organisation and navigation of content within a user interface in a development environment.
- each node includes permissions that control the ability of users to do one or more of the following: view, edit, delete, or manipulate the node.
- each node includes permissions that control the ability of users to do one or more of the following: view, edit, delete, or manipulate other arbitrarily defined rights, which can be examined and enforced by systems interacting with data related to the node.
- each node includes one or more meta-data tags that define one or more of the following: presentation information defining how the associated content is to be displayed; whether the node is the product of a pre-built content process; whether the node is the product of a workflow; geographic location at which the associated content was originally relevant; any other arbitrary information depending on an application using the data related to the node.
- a node may be referenced with a textual path or the unique ID.
- a node includes a property defining how long each connected mobile phone computing device may store that node before requesting fresh content.
- a node is defined by a type which identifies the kind of content the node contains, where types are hierarchically organised in a range of types, so that if a connected mobile phone computing device is compatible with a specific type, then it can use all the properties of that type, but if it is not compatible with that type then it reverts to a simpler, higher-level type with properties that it can use.
- a connected mobile phone computing device makes a best-attempt representation of the content.
- a node includes a property which defines that it is a placeholder or alias to another node, to enable re-use of common content structures.
- a node includes a property which defines that it is a placeholder or alias to another node, to enable multiple branches of a hierarchical tree of nodes to make use of a single set of nodes without duplication of data, to reduce bandwidth used by connected devices retrieving these nodes.
- meta-data may be inherited by children of the node with the addition of a flag upon an individual item of meta-data indicating that it should be inherited by descendants.
- business logic is represented as modules and these modules can be connected together in a visual development environment, for example using drag-and-drop, to form workflows, with modules that can be triggered with an alias from one or more nodes, where the modules produce further nodes and which can then be published for use in other workflows.
- the platform enables publishing for use in workflows to be initiated with a single click or selection action in the visual development environment.
- any module or related workflow can be made available for access, or 'exposed', via any available transport media to enable access to a part or workflow by outside systems.
- the platform enables exposing a module or related workflow to be initiated with a single click or selection action in the visual development environment.
- a name or external reference by which an exposed module is accessed is based upon its display name, assigned by its creator.
- web services over a transport media, such as HTTP, can be implemented with one-click in the visual development environment
- when a module is saved, that module is compiled to a native application library.
- the platform selectively pre-fetches and caches POI data only for those geographic regions which meet predefined criteria of popularity, including regularity of requests, frequency of requests, volume of requests, how recent requests have been, where the requests are POI requests or any other kind of request.
- the platform stores an abstracted record of a customer activity to enable activity to be analysed whilst preserving customers' privacy.
- each logged activity, such as the requesting of a specific node, is assigned one or more activity classes, which allow for the analysis of logged activities without reference to any individual user but instead on a class basis.
- each activity class has a score associated with it which may later be used in aggregate to modify services provided to end users.
- the animated watermark indicates that the ticket is validly available for use.
- the platform responds to requests from client-based applications running on networked connected mobile phone computing devices, the request using standards-based protocols such as HTTP or Protocol Buffers.
- the platform is a computer-implemented server-side platform, in which new services are built entirely on the server-side platform, with client-side applications providing display, navigation and interaction with the networked connected mobile phone computing devices' own facilities.
- the services includes the sale and promotion of products and offers.
- the services includes the digital distribution of any of: vouchers and proofs or purchase.
- the services include live information aggregated from the internet.
- multiple different applications are built using the platform, including one or more of the following applications: location services; digital ticketing; secure wallet; transport ticketing;
   venue ticketing; venue information; live travel information; self-service parking; mobile shopping; home/facilities automation; mobile-based applications for existing B2B processes
- any of the following data formats may be used: XML, JSON Flat JSON, BSON, Protocol Buffers, Thrift, Hessian, ASN.1, MessagePack.
- any of the following transport media can be used: HTTP, TCP sockets, Web sockets, Google's SPDY, XMPP.

According to a second aspect of the invention, there is provided a computer-implemented method of providing content and services from a server to mobile phone computing devices, the mobile phone computing devices connected to the server via a network, the server including a platform, in which the method includes the steps of
(a) using the platform that stores content by arranging nodes in a hierarchical data format that is capable of semantically representing content, with each node including a unique ID and in which the hierarchical format acts as an abstraction layer that insulates a content or service creator and the connected mobile phone computing devices from being restricted (i) to any specific, predefined data format for the content or (ii) to any specific, predefined transport media for exchanging data over the network, and
(b) the platform delivering content and services to the mobile phone computing devices, in which the content is stored as a database on the server, characterized in that the services include digital distribution of tickets content to the mobile phone computing devices, including the platform providing digital tickets to the connected mobile phone computing devices for them to display, the displayed digital tickets including an animated watermark, wherein the animated watermark includes a timer indicating the time available to use the ticket.

An aspect of the disclosure is a platform for the delivery of content and services to networked connected computing devices, in which business logic is represented as modules and these modules can be connected together in a visual development environment, for example using drag-and-drop, to form workflows with modules that can be triggered with an alias from one or more nodes, where the modules produce further nodes and which can then be published for use in workflows

An aspect of the disclosure is a platform for the delivery of content and services to networked connected computing devices, in which the platform selectively pre-fetches and caches POI data only for those geographic regions which meet predefined criteria of popularity, including regularity of requests, frequency of requests, volume of requests, how recent requests have been.

An aspect of the disclosure is a platform for the delivery of content and services to networked connected computing devices, in which the platform stores an abstracted record of a customer activity to enable activity to be analysed whilst preserving customers' privacy.

An aspect of the disclosure is a platform for the delivery of content and services to networked connected computing devices, in which the platform provides digital tickets to the connected computing devices for them to display, the tickets including an animated watermark or image that indicates that the ticket is validly available for use.

### BRIEF DESCRIPTION OF THE DRAWINGS

**Figure 1** shows aliases in a tree of nodes; this indicates the utility of the alias mechanism in allowing reuse of content in multiple contexts without duplication of the original data.
**Figure 2** shows how client devices can display node data - an example of the navigation layout a client device might use to display node content via its own GUI.
**Figure 3** is an example ticket sales application - a broad example of the content and part flows involved in selling bus tickets.
**Figure 4** schematically shows a portion of what happens when a Part flow is created or modified and then saved.

### DETAILED DESCRIPTION

### 1 - Overview

Corethree have developed Core Engine, a cutting-edge technology platform for delivering services of many kinds to connected devices. It is a hosted platform and framework for the development and distribution of content and services to smartphones and other networked equipment.

Applications include the sale and promotion of products and offers, the digital distribution of tickets, vouchers and proofs of purchase, live information aggregated from the Internet and many other use cases.

It is designed to make the process of commissioning, building and managing "app-like" services on mobile and connected devices fast and easy, with a lower TCO for our clients than a traditional mobile development project. It allows communication with mobile devices using a standard set of high-level protocols, so that a single set of mobile apps can give access to an unlimited range of applications running on Core Engine.

This specification documents the various components of Corethree's technology, which all fit together to form the solution. At the end of the specification are use cases detailing how Core Engine is used to service various different scenarios.

### 1.1 - The Platform

Corethree's team have worked for many years on enterprise and B2C software applications frequently using the same design patterns in their architecture, such as:
- User login
- Content management
- Location services
- Transaction auditing
- Activity monitoring
- System integration

The repeated implementation of these features is a lengthy, often complex and always time consuming process, and is especially wasteful when those essential elements are commonly duplicated between projects. The parts of these projects that differ significantly are generally quite minor in comparison to the framework of software written to support them. Whilst there are "toolkits" of software modules available to ease this repetitive process, they only ease this rather than eliminate it.

Corethree's team focused on the problem and surmised that the common components could be broken down into the following **generic** elements:
- A framework for identifying and authenticating users accessing services
- A mechanism for recording / logging discrete activities of any kind
- A system for producing evidence of those activities in the form of electronic receipts or vouchers
- A system for representing, storing and exchanging hierarchical content
- Services for storing and accessing location-based information

By abstracting industry and application-specific details, the vast majority of user-facing software projects can be broken down into these basic elements.

Corethree have designed and built a set of tools providing these generic elements, and have added to them the means to defile extra business logic to "glue" the elements together into complete applications. This business logic can be defined at run-time without any need to replace components or schedule system downtime, and can be modified equally as easily.

Furthermore, all components have been designed to be incrementally updateable, so that loosely connected parts of the whole can be updated and improved upon whilst retaining backwards compatibility. For example, outlying parts such as client applications on mobile devices will continue to work with *new* features even if they make use of facilities that are not known to that client application.

The ultimate result is that Corethree has the capability to quickly:
- Create content and services to be delivered to connected devices (Nodes)
- Integrate with virtually any outside system's data through dynamic business logic (Parts)
- Create Nodes from that integrated data using Aliases to those Parts
- Feed data back to outside systems in industry-standard formats (Exposed Parts)
- Re-use commonly viewed content and services in multiple places (Node Aliases)
- Create logs and audits of transactional activity throughout all of the above (Activity Logging)
- Use those logs to further modify behaviour and build reward and loyalty schemes (Activity Logging and Parts)
- Provide a geographic context to all services and content above (PoIs)

**In short,** Core Engine allows Corethree to build *new* solutions capitalising on our clients' *existing* IT systems and intellectual property in a fraction of the time usually required for a custom application, but with virtually no limitation to the complexity of business logic involved and volume of content delivered. Those solutions are extensible, flexible and since they are built on a single software platform, highly scalable regardless of demand.

### 2 - Innovative Concepts

The following innovative concepts are described:
- Nodes as a hierarchical method of storing semantic information, abstract of exchange format and transport medium
- The simple creation of web services through the exposure of Parts
- Quadrant-based PoI caching
- Logging of abstract activity data for separation of salient data from sensitive data
- Visually watermarked digital tickets

### 3 - Core Engine

Core Engine is a platform for the distribution, aggregation, manipulation and delivery of information with additional features enabling usage monitoring, customer loyalty, and dynamic business workflows. It is a software application which runs on as few or as many servers as are required depending on demand, and is hosted by Corethree. When in operation, it manifests as a service responding via common protocols such as HTTP to individual requests for information from outside client applications.

The combination of a standard specification for client software, open standards-based protocols and server-side business logic means that new services can be built entirely on the server and deployed immediately without client app updates, with the client apps providing display, navigation and interaction with the device's own facilities.

Important characteristics of the system are:
- Storage of arbitrary hierarchical content in structured form (see "Nodes" later in this document)
- Assignment of a unique ID to every entity of content allowing addressing of that content from the outside (e.g. by mobile devices)
- Advanced structuring of content allowing for many views of the same underlying information
- Totally dynamic functionality, allowing for the complete reconfiguration of nearly all of the platform at run-time
- Rapid construction of applications built using the system, thanks to its dynamism and built-in features

Content may be gathered via a variety of abstract means - for example:
- Data can be stored within the same infrastructure as Core Engine itself (e.g. within a database on the same network as Core Engine servers)
- Business logic modules can be designed dynamically (see "Runtime Engine") to pull information from elsewhere on the Internet and convert it to the internal data format used by Core Engine
- A combination of both of the above, where a higher level of business logic may gather data and merge / aggregate it, in order that end users see a single combined view

In the latter case, it is left up to the author of these dynamically defined modules to decide how best to structure the final resulting content. Content for consumption by intermediary software, for example, may be structured more simply but less attractively than content ultimately viewed by an end-user.

### 3.1 - Runtime Engine

Core Engine's immense flexibility comes in the form of modules of business logic, which can be glued together to form workflows. All of the high-level functionality within Core Engine is implemented using these modules ("Parts") and workflows ("Part flows") built from them.

These high-level modules describe logic implemented using lower-level functionality built into the server software, and other facilities provided by the underlying framework used to build Core Engine itself - in this case, Microsoft .NET.

For clarity, there follows examples of the various functionality at each layer:

### The underlying programming framework provides:

- Network communication
- Computing resource management
- Transports (e.g. HTTP or XML-RPC)
- Utility libraries such as web requests and maths functions

### Core Engine provides:

- Communication with databases
- Mechanisms for manipulating data
- User and security authentication
- Implementations of all of the concepts in this document

### Parts may provide logic to:

- Find a longitude and latitude from an address
- Retrieve some content from the main database
- Find a user with a specific mobile phone number
- Send an email or SMS message to a specific recipient
- Search for shops of a specified kind in a given location (see "Location Services")
- Submit a user's credit card details for a purchase (see "Secure Payments")
- Make a record of a transaction for auditing (see "Activity Logging")

In the case of routine interaction with Core Engine's internal functionality, all access is made via a set of Corethree-developed "API" Parts which encapsulate an array of commonly required methods such as those listed above.

### Part flows may provide logic to:

- Take a user's specified postcode, get the corresponding co-ordinates and search for the 25 nearest clothes shops to that location
- Register credit card details, encrypt them securely, pass them for payment processing and then issue an email receipt with a logged audit trail

Typically, Parts and Part flows are used to integrate with outside systems, define business logic for manipulating content, and allow implement of logic specific to Corethree's clients' solutions.

### 3.1.1 - Implementation

### 3.1.1.1 - Parts

Parts take the form of code written in C#, with arbitrary inputs and an output value, and "Part flows", designed using a flowchart-style UI where inputs may be contextual values like the current User or a text box value, or the output of another Part. In this way, parts can be chained together and reuse common functionality.

When saved, Parts are compiled to a native application library for performance - this is crucial, since every single request for information from the outside world is handled by one Part or another. Once loaded (which happens the first time a given Part is requested), it runs as fast as any other part of Core Engine. Core Engine caches these libraries for performance and to conserve memory, and routinely checks for updated versions.

All Parts can be marked as requiring specific permissions on the part of the user triggering their execution. If users are unlikely to ever have these permissions, Core Engine is capable of executing them under impersonation of the original author - this is useful for building reusable Parts to "wrap" potentially dangerous functionality (such as accessing a critical database) in a safe, managed mechanism for use by less able administrators.

### 3.1.1.2 - Part flows

Part flows are a layer on top of Parts, and are stored as a series of "elements" with unique references (e.g. "abc123" and "xyz789"), each one of which is either another Part (or Part flow), user-defined value such as a text string or number, or something contextual such as the current User's name. Stored with these is a list of the links between them - for example "abc123 takes the result of xyz789 as its input".

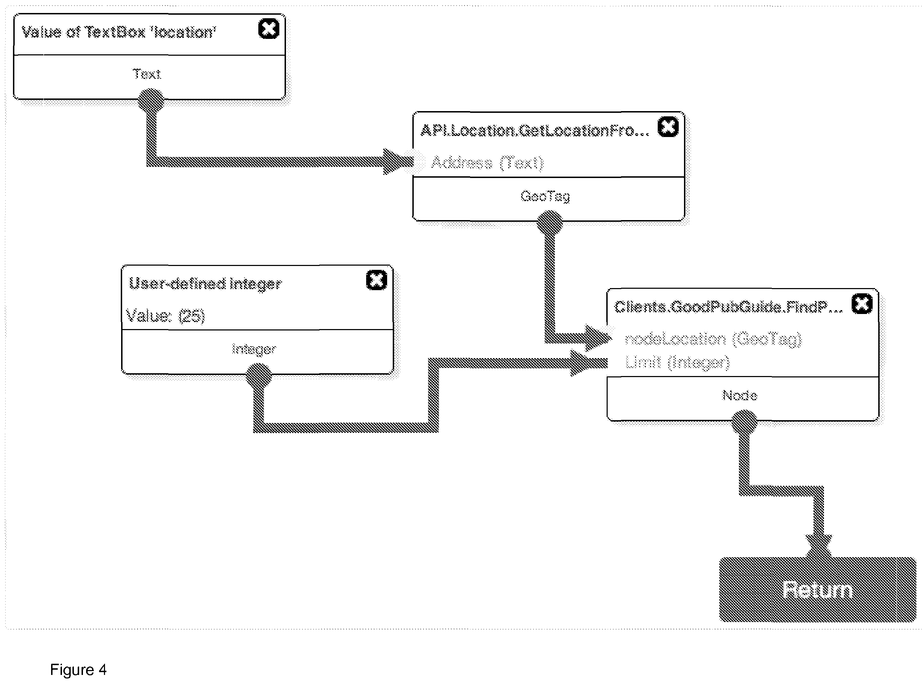

When the Part flow is created or modified and then saved, the following takes place:
1. The elements are sorted according to their relationships - in the above example, "abc123" would come after "xyz789" because it depends on "xyz789"'s result and thus *must* be triggered afterwards. If a circular reference is discovered, it will be reported to the author and will not be saved.
2. For each element in turn, software code is generated which calls the Part, passing in the result of any previous Parts linked to its inputs, and stores its result.
3. The Part flow's output value is also generated to return the defined Part's final result.
4. The generated software code is then compiled as any other Part would be, inheriting the same user-defined settings for exposure (see **Figure 4**) as standard Parts.
5. The compiled result is stored with the other Parts, and is available for use in the same way.

### 3.1.2 - Access from the outside

Any Part or Part flow can be marked as "Exposed". Exposing one of these building blocks makes it available for access via any one of Core Engine's transport media. Transport media are arbitrary ways in which systems consuming Core Engine's data can access it via a computer network - for example:
- Web Services over HTTP
- XML-RPC
- Raw TCP Sockets
- Protocol Buffers

Each of these media may have its own quirks and in-built mechanisms for passing contextual information - for example, XML-RPC will need to convert content generated within Core Engine into an XML format. As such, Node content can be represented in a multitude of ways, including XML and JSON (see "Nodes").

The mechanism of exposure can be as simple as a check-box in an administration console, which simply flags the Part as being available to external access. Depending on the transport media, the method of access will vary but will likely be based upon the Part's name. For example, a Part with the name
Corethree.System.RegisterNewUser
may be exposed if accessed using an HTTP Web Service as:
http://[Core Engine URL]/Corethree/System/RegisterNewUser

As with any other triggering of a Part, Parts accessed in this way may have security requirements on the part of the user triggering them. Whether the user is allowed to proceed is based on their (or the application they are using) having identified themselves, and Core Engine cross-checking their allocated rights with those required by the Part. The mechanism for authenticating will depend on the transport medium - for example HTTP AUTH for HTTP transport.

Exposed Parts typically result in the output of structured Node content - see "Nodes" later in this document.

### Exposed Parts' use cases include:

- Making Core Engine business logic available to third-party systems
- Providing client app APIs via HTTP REST and XML
- Receiving notifications from other applications using "Web Hooks"
- Feeding data via JSON to web-based management dashboards via jQuery and XMLHttpRequests

### 3.1.3 - Self-testing

Parts may also have defined some internal functionality for testing both their own logic and any systems that they rely on to function. Tests require no input information and simply result in a "true" or "false", indicating their success. When a test is defined, Core Engine will periodically perform the test. If the test fails, the author and any other configured administrators can be notified by email or other appropriate means that the Part requires maintenance.

Furthermore, thresholds for acceptable failures, detailed auditing of testing and information about the test process itself, and aggregated business intelligence on success and failure rates can all be configured and used to further improve the reliability of business logic.

Finally, the test itself may modify the behaviour of other Core Engine services in response to a success or failure - for example, updating tabular reporting data, or temporarily suspending a given application if an external service it depends on becomes unavailable.

### Examples of tests:

- Verifying that an external web service is available to a Part
- Checking that a third-party software component is working in readiness for a critical client

### 3.2 - Part Scheduler

Similar to the above, Part self-test mechanism, Parts themselves can be scheduled to execute directly on any defined schedule. Core Engine uses "Cron" schedules to define when to execute Parts, but other scheduling methods could also be used, such as a periodic timer. When a Part is run, if it results in an error, the author of the Part and the scheduled job can be notified accordingly, and provided with a log of the execution and failure details.

This facility is immensely powerful, and since Parts can encapsulate almost any kind of dynamic business logic, scheduled Parts can be used to manage most routine tasks involved in keeping the system running smoothly.

### Use-cases for Part scheduling include:

- Checking of various edge cases within Core Engine, such as Users with misconfigured accounts
- Emailing new Users 24 hours after signup to welcome them
- Regularly verifying the availability of databases and other resources
- Automatically allocating new server resources based on usage and bandwidth patterns

### 3.3 - Activity Logging

Shared application platforms commonly require separation of clients' sensitive information, which is a challenge when data is held in one place. Attempting to unify customer usage data when customers may be shared between those business clients is even more difficult.

There is an increasing need for intelligent methods to analyse how end-users are interacting with online services whilst preserving their right to privacy. This part of the system avoids the need for full disclosure whilst at the same time gaining effective, useful insights into the activities of end-users.

### 3.3.1 - Mechanism

Core Engine abstracts records of customer activity within the system, to allow the use of otherwise sensitive activity information without disclosing details of individual transactions or data belonging to other clients.

The system abstracts the record of an activity from the activity itself, in order to:
1. Remove the need to disclose the details of transaction records to a client's competitors when producing overall statistical reports for all clients
2. Produce generic statistics on classes of transaction conducted using a system
3. Produce arbitrary rankings of end-users according to the importance of the transactions they carry out
4. Analyse patterns in user behaviour to suggest services relevant to them, based on patterns found in historical data from both their own and other users' activity

The mechanism consists of two elements:
1. Functionality within Core Engine, accessible from within Parts, to log an "activity" - for example, when a specific Node is requested either individually or as part of a larger group of content, during the execution of a Part flow, or upon receiving data from an outside system. A logged activity record can include meta-data relevant to the logic around it.
2. Each logged activity is assigned one or more "activity classes". These classes allow for the analysis of logged activities without reference to the individual user. Each has a name and a category, further segmenting them for organisational purposes. Each one may also have a numerical score associated with it, the aggregate of which may accrue into an end-user's own score over time. For example:
   ∘ An activity logged during the booking of a hotel room might have an activity class of "Travel booking", a category of "Travel" and a score of 10 points.
   ∘ Reading a news article might have an activity class of "News consumption", a category of "Content" and a score of 1 point.

As the above suggests, activities requiring substantial commitment (e.g. a financial purchase) might accrue a higher score than those of a more casual nature (e.g. reading a page of content). Thus, via reports produced for business clients, a customer reward scheme may be constructed around these scores - see "Rewarding activity" further on in this document.

The end result is that since the activity itself is recorded in a generic way, but can now be viewed without full details of the transaction carried out, business clients can be provided with market information based upon these activity class records and the end-users carrying them out without disclosing individual transaction details, which may be of a sensitive nature to both the end-user and the business client fulfilling the transaction.

### 3.4 - Rewarding activity

The activity logging system detailed here, due to its scoring and weighting mechanisms, has applications outside simple business analytics. It can also be used as the basis for a system of rewarding users for their on-going usage of the system ("engagement").

Internal activity can build-up points on users' aggregated scores, encouraging the further usage of the system. Differing points scores can be assigned using the triggers detailed in the previous section ("Abstraction of Customer Usage Data") in order to encourage activity in a particular area or set of services in conjunction with a promotional campaign. Since activity is often tied to a specific user, by storing that user's identity details for online services (such as social networks), their activity elsewhere can also influence their aggregated score. For example, by linking a Twitter account with a user's records in the system, every time a user "Tweets", a Part can be executed, checking to see if the user has promoted a service within the system, logging an activity with associated reward points if so, to encourage users to publicise the system.

### 3.5 - Automatic Data Logging

Using the combination of the activity logging mechanism and the runtime engine, the system is able to record arbitrary data logged against date and time, triggered via various methods:
- User activity within Parts
- Pre-set schedules (see "Part Scheduler")
- Outside triggers (see "Access from the outside")

The activity logged can store a numerical value against the current date and time using the meta-data attributes. Alongside this value will be an identifier unique to that type of logged data, and permissions indicating who is permitted to view the data.

Once data has been collected, it may be displayed in standard time-series graph form. Multiple sets of data may also be viewed on the same graph, allowing for visual cross-referencing of differing classes of data. Examples of this may be:
- Logging of computer systems' performance
- Stock market tracking
- Automatic recording and reporting of weather conditions
- "Life-logging", where a user manually records their weight, fitness or other data in order to draw conclusions over time

### 3.6 - Building applications with data

Since the activity logging system is part of Core Engine itself, its functionality for both logging and analysis of logs is available from within Parts. Powerful facilities can be built using a combination of logging activity and then using those logs to affect other parts of an application.

### For example:

- Communicating with business' customers by proxy, via the system, without either party having to handle customers' details
- Promoting only those services which are relevant to end-users by analysing the abstract activity information
- Offering rewards and offers to customers, based upon their recent activity, without requiring the use confidential data
- Using logged activities as digital receipts, vouchers and tickets (see "Ticketing")

### 4 - Nodes

The system incorporates a database of content, which is structured hierarchically, and is made up of individual content entities ("Nodes"), each of which has a name, unique identification property ("ID" - generally a GUID), and a number of other arbitrary properties relevant to the content itself. The structure is provided by one-to-many parent-child relationships, where a given Node may have one Parent and multiple Children. In this way, the relationship between Nodes can be represented in a way that is useful for both semantic organisation and visual navigation between Nodes when presented within a user interface. The entire database may be thought of as a tree, with branches represented by the Nodes.

Each Node may have a number of permission definitions assigned to it, which by default cascade down to its children, unless they each over-ride that permission explicitly. Such permissions may control the ability of users and the public to view, edit, delete and otherwise manipulate those Nodes.

Similarly, tags (detailed further on in this document) can provide for the storage of meta-data describing secondary characteristics of each Node, which although not critical to the presentation and processing of a Node, can contain information useful to both the central system and consuming devices. Examples of such tags include presentation information (such as colour schemes for visual rendering), or a geographic location at which the content was originally relevant.

### 4.1.1 - Node Addressing ("CorePath")

Since each Node has a unique ID and various other properties, the system can allow referral to specific Nodes and branches by means of a textual path, similar to the specification known as XPath. Each path along the tree may be referred to using either a Node's ID or one of its properties, with steps separated by a predefined symbol (e.g. "/"), and the properties prefixed with another positional symbol (e.g. "@"). For example, where Node A has children B and C, and C has a child D, the following may be used to refer to D:
/@ID='A'/@ID='C'/@ID='D'

Other properties can also be used to refer to Nodes - for example, if Node C is named "Blue":
/@ID='A'/@Name='Blue'/@ID='D'

As a shortcut, if the user knows that there is only one Node with a given property, the following may be used:
//@ID='D'

Access to content using the methods above (named "CorePath") is subject to the querying user's permissions as cross-referenced to the Nodes they request access to.

As a secondary facility, the above CorePath addresses may also contain keyword place-holders which the system will automatically replace with computed values. These place-holders can be predefined using a custom syntax, or can take the form of short snippets of programming code, delimited to indicate their status as place-holders. For example, using C# code syntax, this pseudo-CorePath could be used to find all Nodes named after a given user:
//@Name='{{User.Name}}'

This allows for very simple filtering based upon criteria such as date and time, user meta-data and other readily available information without the potential complexity of Part aliases.

### 4.1.2 - Caching

Each Node has a property defining how long each device consuming the content may store it before requesting fresh content. This may be defined, for example, as the number of seconds from retrieval ("TTL" or "Time To Live"). When a consuming device retrieves content, it should actively monitor the TTL property of relevant content (for example, content currently being viewed by a user), and should request an update if it expires.

### 4.1.3 - Node Types

Each Node may have a Type. This Type is a text string which identifies the kind of content that this Node contains, along with the properties that it can be expected to have. The specification of the system defines a range of Node Types, which are generic abstractions of common varieties of content. For example:
- Node.Media.Image
- Node.Data
- Node.Data.Dictionary.KeyValuePair

It will be noted from the above examples that dot-notation is used to indicate the conceptual hierarchy of Node Types. Each nested Type inherits the properties from its parent Type, and sometimes gains further properties. This is intended to ensure that if a consuming device cannot understand a particular type of content (for example, Node.Media.Image), it can "fall-back" to a higher-level Type (for example, a Node). In this example, it would retain the Name property, and so would be able to display to the user a simple navigation item with the Node's name, linking to the target image without display it itself.

The system thus enables elegant evolution of consuming devices' capabilities without rendering previous generations of accessing software immediately obsolete.

### 4.1.4 - Controls and Events

Nodes may also represent controls with which users can interact with services and provide their own input in client apps. For example, all of these are currently in use within Core Engine:
- Node.FormControls.TextBox - allows users to provide arbitrary text input
- Node.FormControls.ListBox - allows users to choose an items from a list of choices setup by administrators
- Node.FormControls.Button - makes a request by a client app to Core Engine, triggering a Part to handle the "click"

"Events" are the general-purpose name for the triggering of a button or some other situation requiring Core Engine to handle it and provide further actions. When an event is triggered by a user, the client app will send a request to an exposed Part, giving it three things:
- The unique ID of the Node triggered (e.g. the Button)
- The name of the event triggered (e.g. "click")
- A list of current values of the other FormControls the user may have modified
- A list of any Nodes which may have been flagged for purchase or further processing (e.g. shopping basket items)

The Part will then ask Core Engine to find another Part flagged as containing the business logic to handle the event, and will pass execution to that Part, if it's available. Finally, any appropriate business logic will be carried out, possibly involving the values of the other FormControls provided, and a result will be sent back to the client app for presentation to the user. In this way, fully interactive, transactional applications can be built with multiple steps of Nodes with FormControls and Parts to handle each stage.

In Corethree's implementation, creation of Parts to handle events is simply by name. In the case of a button with ID "abc123", the Part may be named "Handler.Click.abc123" - this convention keeps the processes loosely coupled, allowing for flexibility of implementation and on-going architecture.

### 4.1.5 - Node Tags

Any Node may have any number of Node Tags, which are key/value pairs of strings, permitted to contain any type of meta-data. Tags are designed for several uses:
- Specification of optional but recommended presentation attributes for consuming devices, such as header graphics and background colours and textures. Some may not be appropriate for a particular device (for example, colour attributes given to an audio device), in which case it may be ignored.
- Marking of Nodes and their child hierarchies as the products of pre-built content processes, and thus locked for editing by anything other than the original Wizard used to create them.
- Marking of Nodes and their child hierarchies (primarily aliases) as the product of a workflow, thus allowing the same or another workflow to modify or remove them at a later time.
- Storing secondary information relevant but not critical to the data itself - for example, notifying consuming devices that the information may not be relevant outside a given geographic area (see "Geographic data relevance")

### 4.1.5.1 - Syntax

The anatomy of a Tag Key is simple - it is just a dot-delimited string, with segments used as a namespace mechanism to keep control of the tags used. The rest of this documentation page catalogues the tags used, their purpose, and their creator.

When saved in the database, for reasons of internal query syntax, '.' chars are replaced with "_" (underscores), and so Tag names must not include these.

### 4.1.5.2 - Hierarchy and Cascading

A Key may have the prefix "C:", which specifies that that particular Tag should persist to the Child Nodes of the Node upon which it is specified. For example, a hypothetical "C:Style.Header.Color" would apply a header colouring to not only a Node, but also all of its Children.

Keys may also be given the prefix "I:" by the system, which indicates that that Tag has been cascaded down from an ancestor at some point. The prefix (but not the Tag itself) should be ignored by clients unless there is a specific reason to do otherwise.

### 4.1.5.3 - Image Dimensions

Tags specifying images can also have optional related Tags giving the width and height of the image, which will be generated automatically when the images are set via Core Control. These will be identical to the main Tag, with the suffix ".W" and ".H", and will specify an integer pixel value.

### 4.1.5.4 - Geographic data relevance

As touched upon earlier, Node tags may be used to store information about the geographic region within which a given set of data is relevant. To use an earlier example, a business listings Part flow may generate Nodes representing pizza restaurants in London. The parent Node may, before being sent to consuming devices, have the following tags added:
- Latitude of the requesting user
- Longitude of the requesting user
- A radius from the origin

Combined, these tags indicate (to a consuming device equipped with the means to monitor its geographic location) the area within which those listings are relevant. If the user moves outside of that area whilst viewing the listings, the consuming device is now able to notify the end-user, and allow them to refresh and re-request new content for their new location, or do so automatically.

### 4.1.6 - Aliases

In a system of substantial size, duplication of information is a risk. As such, the system has mechanisms to allow the referral of content from two locations, and the ability to treat content Nodes as if they are children of one parent Node when they are in fact children of another.

Each Node may have a property which defines that it is a placeholder to another Node (an "alias"). The identity of the other node is referred to using a URL-style string, along with a second property, the "alias mode", indicating when that alias should be followed:
- **Passive:** When content is requested, the alias is followed and the content that it refers to merged into the tree instead of the alias Node itself.
- **On Request:** When content is requested, a placeholder is added as a child indicating to consuming devices that there is further content available should they need it. The system will then follow the alias if the requesting device asks for the alias specifically.
- **Background:** When content is requested, a placeholder is added as a child indicating to consuming devices that there is further content available should they need it. The system will then actively follow the alias, storing the content ready for when the requesting device asks for the alias specifically.
- **Active:** The system will actively update the content when its TTL property states it should be refreshed.

Alias URLs may be in the following formats:
- query://[CorePath]
- part://[Part Name]

When Core Engine receives a request for a Node or tree of Nodes which includes Aliases, it will resolve the aliases (depending on the alias mode), merging in the resulting query result or Part output accordingly.

### 4.1.7 - Aliases for service subscription

Primarily, aliases are intended to allow for re-use of common content structures, and in order that multiple end-users can access a single set of Nodes without duplication of data. When used in conjunction with Node tags for the storage of meta-data about a particular set of Nodes, they form the basis for a service subscription-management framework:
- Users can browse lists of Nodes, tagged as publicly-available services, contained within a predefined parent Node
- If they want to access that Node frequently, they may - using some visual mechanism presented on their consuming device - indicate that this is a "bookmarked" service
- An alias will be created in a section of the hierarchy reserved for their own content, referring to the database address of the chosen Node

Thus, many users may access one service, all from within their own "sub-root" of the overall tree, as if it were directly held at that location, whilst allowing administrators to centrally manage that content Node elsewhere.

Additionally, this provides a valuable method to reduce the bandwidth used in consuming devices retrieving these service Nodes, especially when such aliases are marked with the "On Request" mode. This may be very important both for end-users, whose available bandwidth is frequently cost-limited by their service provider, and by Corethree, who will be faced with similar considerations in terms of hosting and bandwidth costs.

### 4.1.8 - Output to external systems

Since the ultimate aim of the Node specification is to provide a generic, platform-agnostic format for the representation of semantic content to users, it is essential that such content be easily represented and transferred to those devices used by users for the navigation about the services provided in Node form. Since the data is hierarchical, hierarchical data formats are generally used. For example, XML is an ideal mechanism for the output and transference of Node content, since all properties and relationships can be contained in their original structure as XML entities.

For those consuming devices unable to work with XML, there are many other formats available, including JSON, Protocol Buffers and Thrift, all of which are designed for the textual serialisation of hierarchical data. Furthermore, such data can be exchanged via a variety of common communications protocols, such as HTTP, TCP Sockets, XML-RPC and many others, without interference, often taking advantage of helpful optimisations such as data compression and caching.

Some devices have problems with the deeply nested hierarchical structure of Node data. For that reason, flat / relational can also be provided. In the case of "flat JSON", data is provided as an array of single JSON Nodes, with parent/child relationships represented using a "ParentID" property and "Ancestors" list.

A full list of formats and transports is impossible to create, as Nodes are by definition agnostic of both format and media. However, by way of example, Nodes could be exchanged using any combination of the following:
- Transports:
   ∘ HTTP
   ∘ TCP sockets
   ∘ Web sockets
   ∘ Google's SPDY
   ∘ XMPP
- Formats:
   ∘ XML
   ∘ JSON
   ∘ Flat JSON
   ∘ BSON
   ∘ Protocol Buffers
   ∘ Thrift
   ∘ Hessian
   ∘ ASN.1
   ∘ MessagePack

By its very nature, any such list is partial - one could come up with a different method of writing down the properties and hierarchy of Nodes and relationships between them, and as long as both ends of an exchange knew how to deal with it, that would be fine. The important factor when considering Nodes is the *semantic content.* The same (abbreviated) Node could be written in XML:

```
      <Node Type="Node.Media.Image" ID="abc123">
              <Name>Example Node</Name>
              <Children>
                       [further Nodes]
              </Children>
      </Node>
```

or in Json:

```
       {Type: "Node.Media.Image",
              Name: "Example Node",
               ID: "abc123",
              Children:
               [
                       [further Nodes]
               ]
       }
```

or indeed a binary format not even human-readable.

In all cases, the content is the same, and irrelevant of the format, the hierarchy is the same and client devices should interpret them the same. It means that the server and client can negotiate the best combination for the capabilities of each at any moment, and the original author need not know in advance, or indeed at the time. Furthermore, if new and more efficient methods of data transfer are developed in the future, client and server can add support and take advantage of it, speeding up interaction - but no other part of the software stack need be affected, including Core Engine's runtime Parts system, the rest of the client app, the database etc.

At the point of consumption, systems consuming this data can adapt it to their needs, resolving textually-represented Node type names (such as "Node.Media.Image", for example) to their best supported type for that device. Thus, all consuming devices will be capable of rendering a best-attempt representation of any content provided by the main system, a solution ideal for a large, widely-distributed arrangement of consuming devices, which may or may not be up-to-date as the capabilities progress over time.

### 4.2 - Storage in the real world

Core Engine currently stores Node data in MongoDB, which is a non-relational database system designed for high performance and easy changes to the data schema. Nodes are stored in a single collection of individual Nodes with a single root.

As with "flat JSON", Nodes are kept "loose" and the hierarchy is represented using "ParentID" and "Ancestors" fields. This presents certain challenges - for example, the removal and replacement of an entire branch of the tree requires the old branch to be deleted based on a common ancestor contained in descendants' "Ancestors" list, and then the prefixing of the new Nodes' ancestry with that of their new common parent in order to maintain hierarchical integrity.

Despite each Node tree query often requiring multiple database transactions, the resulting storage system is extremely fast, with complex branch queries often taking under 10ms to complete.

### 4.3 - Use cases

Node trees' hierarchical nature, together with their ability to store virtually any kind of content and attached meta-data makes them useful as a generic data storage system for all sorts of applications built on top of Core Engine. Examples include:

### Distributed state management

Parts and applications built using them can store data representing application state (e.g. the stage of a business process the user has reached) in a Node's meta-data tags, and then sent back to the server later. This is similar to how cookies work in web browsers, with the major difference being that this meta-data can be attached to Node content at deeper levels than the one currently being used.

For example, a listing of retail shop locations may contain aliases, each with a tag with a store's name. When that alias is navigated to, and the client app requests resolution of that alias, the tag can be used by a Part to retrieve further details about the chosen store, and then generate more Nodes with a map, picture of the shop front and contact details.

### Server-side state management - e.g. Retail inventory

Similarly, Nodes generated and stored either by hand or automatically via Parts can act as a data store.

For example, a small business' mobile and e-commerce system can use Nodes to represent products and categories of product, including user-friendly content, pricing and images, but also the current stock levels in a Node meta-data tag. When an item is ordered and the transaction is handled by a Part or Part flow, that Part can decrement the stock could on an individual item Node, which would then feed back into any user interfaces displaying those Nodes to affect whether that item is available to order. A separate set of Nodes and Parts can also be provided for mobile and exposed Part use (as an HTTP API, for example) to maintain stock records when new stock arrives.

As an aside, activity logging could also come into play here, as a mechanism for auditing and reporting on the transactions affecting stock levels over time. Scheduled Parts could also be used to regularly check stock levels and send automatic notifications to the business owner when they get low.

### Content management

A combination of Nodes and exposed Parts accessing those Nodes can support a mobile application and website simultaneously. One way to use this would be to store structured information for browsing via Corethree's client apps, including branding and styling meta-data, but also create exposed Parts to provide this data via an HTTP REST API.

That API can then be used by a simple set of ASP.NET or PHP scripts running on an outside web server to generate corresponding web pages using the Node content and a pre-set page template. This is in fact the method used to manage the majority of Corethree's own website.

### 5 - Location Services

### 5.1 - Abstract Pol

Points of Interest (PoI) can be generally summarised as any location, expressed within the Core Engine system as a latitude and longitude, which may be of interest to an end-user or as a component piece of information within a service used by end-users.

In order to store and manipulate these generic PoI, Core Engine stores them in an abstract form like so:
- **Unique ID** - an identifier to identify this PoI from others within the same system or storage repository
- **Name** - a name used for display purposes
- **Namespace** - a field identifying the class of PoI, as there may be many of the same kind
- **Location** - the latitudinal and longitudinal co-ordinates of the location
- **Meta-data** - key-value pairs containing information relevant to the kind of PoI

An example of their use could be in storing details of retail stores belonging to one of Corethree's clients. A PoI for a restaurant may look like this, if represented using JSON:

```
         {
                   ID: "xyz123",
                   Name: "Carl's Cafe, London",
                   Namespace: "com.carlscafe.branches",
                   Location: [51.34982349, -2.34420498],
                   Metadata:
                        {
                                       Address: "21 Wood Street",
                                       Postcode: "W1 4AB",
                                       Phone: "020 7123 4567",
                                       Opens: 0900,
                                       Closes: 1800
                        }
         }
```

In this way, PoI can be handled in a standard way, and aggregated regardless of type without losing their unique properties at the namespace level. Core Engine stores PoI of many kinds in a single database, filtered by location, namespace and various other metadata criteria depending on the usage. Typically, these PoI are first accessed by Parts as a result of an alias resolution or a FormControl event - for example, a page with a TextBox for postcode entry and a Button. When the button is pressed, the "click" event handling Part can search the PoI database for items near the given postcode.

Before sending back to a client app, the PoI will need to be converted into a Node or set of Nodes. This is where the metadata is used - the business logic within the Part processing the request can extract the metadata - for example, a picture of the shop-front - and build a Node to represent the content - for example, a Node.Media.Image to display the picture.

### 5.2 - Pol Handlers

In some situations, PoI of many sorts may be displayed in one listing - such as a list of amenities of various kinds near a user's current location. In this case, the namespace can be used to identify a Part which can generate a listing item (in Node form) and then handle the user navigating to view more details. As with Node event handlers, this is by convention.

In the case of a branch of Carl's Cafe, for example, the Part used to turn a PoI into a list item could be named:
PoIHandler.RenderItem.com_carlscafe_branches
and the Part to handle displaying the branch details could be named:
PoIHandler.RenderDetails.com_carlscafe_branches

These handlers can do much more than just display static details - since they produce Nodes as output, they can contain deeper-level menus, purchase processes, table booking and virtually anything else required.

### 5.3 - Quadrant-based caching

Often, PoI will be drawn from sources outside of Core Engine. In these cases, they may be generated by Parts, either scheduled or triggered by users' requests, and pulled-in from web services or other online data sources. This presents a problem in several ways:
- It makes them difficult to search and aggregate quickly
- It requires potentially many queries to other organisations' IT systems

We can resolve these problems by pre-fetching and caching these data in advance. This, though, also creates a problem in that many sources of data are only able to provide data for a limited region at one time. In the case of web services provided for searching for cash machines, for example, we are only able to fetch results for 50 miles around a given latitude and longitude at a time. Pre-fetching the whole of the UK, then, would require approximately 1,890 separate requests, which the owners of the service may object to.

Core Engine avoids this problem like so:
1. The world is mathematically split into zones (or "quadrants") based on subdivisions of longitude and latitude
2. When a request for any data arrives from a client app, the location of the user's device is logged if it's available, and their current quadrant is recorded
3. On a regular basis, Core Engine schedules a Part to execute, which compiles a list of the most popular quadrants for user requests
4. Separately, a scheduled Part is executed regularly for each type of PoI, which fetches the data for the most popular quadrants recently logged

Locations not covered can be fetched separately when required, but this method vastly reduces the volume of location data required to be pre-fetched, as it will only bother with fetching for locations where users regularly require information.

There are various algorithms which can be used to quickly calculate a user's quadrant based on their location - Core Engine generally uses the Maidenhead Locator System, which breaks the grid up into squares represented as 8-character identifiers for convenience, which are approximately 5km/sq. depending on the location.

### 6 - Digital Ticketing

### 6.1 - Overview

Digital tickets are a way for client devices to show limited-access vouchers and tokens as proof of offer or purchase. Corethree use them to produce digital ticketing systems for transport and venue operators, and vouchers for loyalty and retail offers.

They have a few basic properties:
1. a watermark, animated on client devices
2. a pseudo-randomly changing colour and word code, changing on an identical schedule for all devices displaying the same ticket
3. an expiry, either as a TTL from first access, or an absolute date and time

### 6.2 - Properties and storage

Tickets are stored as logged activities (see "Activity Logging"), and as such may simultaneously be the audit record of that item's purchase or issuance. The distinguishing property of a ticket as opposed to a standard activity is its metadata (again, see "Activity Logging" for further details).

In addition to a unique ID identifying the individual ticket, tickets have several items of meta-data which control their properties:
- Ticket. Expiry - A UTC-formatted DateTime value defining when the Ticket should no longer display its animated watermark. Optional - if not present, client devices should set this value on access, and trigger the same on the server. See next section for more details.
- Ticket.TTL - A value in minutes, indicating how long a ticket should display its watermark after first access, if Ticket.Expiry is not explicitly set.
- Ticket.UpdateResolution - A value in hours, indicating how frequently the watermark colour and word code should change.
- Ticket.DigiticketID - A value unique to this *class* of ticket, which ensures that all tickets of this class and Ticket.UpdateResolution display identical colour and code at any given time.
- Ticket.DayTimeMask - A definition of when the ticket may be accessed. See next section for further details.
- Ticket.RoundExpiryDownToTime - An optional time controlling rounding-down of ticket expiry (see "Display: Redeemed and valid" for details of the business logic used)

The last two items above are crucial to the verification of tickets. By making sure that every device with matching DigiticketID and UpdateResolution displays an identical graphic at any given time, client staff can simply verify matching visuals to confirm validity.

### 6.3 - Client-side behavior

### 6.3.1 - Caching and Delivery

The mechanism for delivery of tickets is via an exposed Part, which fetches all tickets available to the requesting user and then converts them to Nodes, which include both the ticket information above, and also any relevant content such as logos, branding and links to product information.

Tickets are stored on the client-side in a persistent fashion, so that they are available even if the device is operating offline. Tickets can be retrieved from the server at any time by requesting all new items created or updated since a specified date and time - for example, an HTTP request may look like this:
https://[server address]/Corethree/Client Support/FetchTickets?from=[Date/time]

The data format in which the ticket Nodes are delivered can be changed depending on the client device and its capabilities.

### 6.3.2 - Format and rendering

Tickets are simply standard Nodes, with the same meta-tags as a Ticket activity on the first child-level Nodes sent back. Each ticket is a normal, navigable Node. Client devices provide a "Tickets and vouchers" navigation choice, which will list saved tickets in the following priority:
1. Currently redeemed and usable tickets
2. Tickets not yet redeemed
3. Expired tickets
4. Date / time of issue

Once opened, Tickets are rendered and navigable as standard Nodes, with one key difference: any Nodes with ticket meta-tags should display the animated watermark above all other content bar the title bar.

### 6.3.3 - Display: Expired

Expired tickets will simply display a large "Expired" graphic above Node content.

### 6.3.4 - Display: Not yet redeemed

Tickets which have yet to be redeemed will display a button marked "Activate", with a caption below indicating the validity time within which the ticket will be valid. For example, "Valid for 3 days after redemption". Upon selecting that button, the user is asked to confirm, with the message "Once you've redeemed this, you'll have [time] to use it", plus a "Cancel" and "Yes, please" buttons. Confirmation of redemption will immediately:
- Set the Ticket.Expiry value to the current UTC DateTime plus the Ticket.TTL value in minutes
- If the Ticket.RoundExpiryDownToTime is defined, the Ticket.Expiry value will be rounded down to that time, on the same day as calculated above
- Send a background notification back to the Core Engine server to set the same value server-side (via an exposed Part)
- Update the visual display to redeemed and valid state

### 6.3.5 - Display: Redeemed and valid

Tickets currently available to use will display an animated watermark, generated using the following process:
1. Take the current UTC date/time
2. Calculate the number of whole hours since midnight on 1st January 1970
3. Divide that number by the resolution, and round down to the nearest whole integer value
4. This gives us a sequence number - that is, the number of whole resolution segments since epoch.
5. Concatenate (as strings) the sequence number, the resolution and the ticket type GUID, delimited with pipes
6. MD5 hash the whole thing
7. Take the first hex char's integer value. That gives us a zero-based index to select the colour (from an array in the order red, green, blue, yellow, orange, purple, brown, grey) - any value over 7 wraps back to 0.
8. Take the second and third hex chars as an integer value to 255 (0xff). That integer should be used to select a word from a predefined code list, curated to ensure all words are both pronounceable (which makes it easier for quick recognition by bus drivers) and innocuous

Once the values for colour and code have been generated, graphical layers are displayed, from back to front:
1. Standard grey scale animation
2. Solid coloured overlay block with the generated colour index, at 50% opacity
3. White text with transparent background, displaying the chosen code word

A countdown timer is shown below the watermark, displaying a live indication of the validity time remaining.

### 6.3.5.1 - Day / Time Mask

The ticket's Daytime Mask may contain details specifying when the ticket should be available to use. If this is not defined, or the ticket has expired, this should be ignored, but if it's present, client devices MUST check it before allowing access.

An example of how this mask may be represented in JSON is as follows:

```
         [
          {day: 1},
          {day: {start:6, end:7}},
          {time: {start:1730, end:2000}},
          {day: 1, time: {start:900, end:1700}},
          { day: {start:3, end:5}, time: {start:1730, end:2000}}
         ]
```

As the above example suggests, the rule set is made up of an array of JSON objects, where each individual rule can comprise:
- Single days (line 2)
- A range of days (line 3)
- A range of times in military format (line 4 - note that times must not include a leading zero, since JSON does not support this)
- A combination of day and time rules (lines 5 and 6)

When evaluating rules for a match to the current date and time, *all* items within a single rule must match, but *any* of the rules in the set can match.

A rule specifying that a ticket is valid off-peak on weekdays, and all weekend would be:

```
     [
          {day: {start:1, end:5}, time: {start:1730, end:2359}},
          {day: {start:6, end:7}}
     ]
```

### 6.4 - Server-side behavior

Once a ticket has been redeemed on the client, the device will attempt to inform the server using an exposed Part. If not online, or if an error occurs, then the ticket will be added to a local queue that will attempt to activate the tickets again once every minute.

### 7 - Secure Wallet

Core Engine's integration capabilities extend easily to equipping applications with the means to take payments from customers in a variety of ways. Applications from consumer mobile commerce and food ordering to commercial insurance sales may require the secure collection of payment details of one sort or another - most frequently credit or debit card details.

Outside of pure payment applications, there are other scenarios requiring the use of securely stored data not limited to card details - various kinds of information may need to be stored on client devices. For example, billing addresses may be entered many times, so it's advantageous to store them for re-use.

However, in order to keep our clients' options open in terms of how these details are used, we required a mechanism to store them in a way that they could be accessed in their original form. Thus, Core Engine can switch to a different payment provider (for example) without asking end-users to re-enter them. In order to do this securely, we have specified a split-encryption mechanism to store data on the client device and the key centrally, with no way to link them until the user needs to use them.

### 7.1 - Security implementation

The process is quite straightforward and makes use of industry standard public/private key encryption in an innovative way:
1. The end-user, when presented with a screen asking for secure details, chooses to create a new secure registration
2. The client app requests the registration form from Core Engine, which sends back details of the various fields required - for example, card details and cardholder address
3. The end-user is presented with an appropriate form, and enters their details
4. The client app submits these details to an exposed Core Engine Part once only, via an encrypted network link such as HTTPS
5. The Part uses internal modules in Core Engine to generate a secure key pair using an algorithm such as 3DES, RSA or Blowfish
6. The public key is used to encrypt the payment details, and is immediately discarded
7. The private key is filed in an anonymous storage database alongside an expiry date (for housekeeping purposes, if available) and a uniquely generated ID, but *crucially* nothing linking it back to the user
8. The encrypted data, key ID and a friendly name (e.g. "Visa ending 1234") is sent back to the client device
9. The client device can then file it for use by the user

When the user is ready to actually use the details, the process is similar:
1. The user selects the filed-away encrypted details they want to use
2. The client app sends the encrypted details and key ID to an exposed Core Engine Part along with details of the transaction which will use them
3. The Part passes the encrypted details and key ID into a self-contained and sealed Core Engine software module which is configured to use details of that type (e.g. payment cards)
4. The secure module fetches the appropriate key with the given ID and decrypts the encrypted details
5. The transaction is then processed, with the result (e.g. "Success") being passed back to Core Engine
6. An appropriate set of business logic may then (for example) log the result, send an email and notify the user via Nodes sent back to the client app

### 7.2 - Client app implementation

### 7.2.1 - User choice

When a user is presented with a payment form, a "Secure Wallet Picker" control can be displayed by the client device. This can be a standard list box, populated with all stored data items of type matching the appropriate type of secure item. There will also be an "Add Item" option, in case the user needs to create a new payment method, or none yet exist.

### 7.2.2 - New item registration

If the user needs to add a new item, the client app will make a call to the server using the following URL, sending the type of the item being registered. For example:
https://[server address]/Corethree/ClientSupport/GetSecureWalletAdditionForm?type=[Item type]

This will send back a structure of Nodes generated to take the details of the new item. It's up to the server to ensure that the form is suitable for the given kind of item. The client device simply needs to browse that returned content.

When registration is complete, a Node (generally a message to be popped-up) will be sent back to confirm the addition. This message will have several additional Node Tags containing data relevant to the process:
- **ClientAction.Wallet.Add** - this will contain the newly encrypted payment data. This can be used to provide the user with helpful information during item selection - see "Item Format". This should be stored locally.
- **ClientAction.Navigate.Back** - this will be an integer value instructing the client device to move back the given number of items in the navigation history. This should take users back to the original payment page they started from, where the secure wallet picker should now include the new item.

### 7.2.3 - Item Format

Secure data items contain the following fields:
- ID - the key ID identifying this item so that it can be decrypted server-side
- Description - a friendly string to be shown to users when required (e.g. "Visa ending 1234")
- Type - corresponds to the type of details (e.g. "CreditCard"), allowing filtering within the locally stored items
- Expires - a date and time value indicating when the item expires and can be removed automatically
- Data - the encrypted binary data, to be stored as-is

### 7.2.4 - Item Removal

Separately from addition, Core Engine may also send UI information to the client device to display a picker for item removal. In this case, it'll work exactly the same as any other form submission.

The only difference is that the subsequent response will include a Node Tag to command the client to delete a payment item:
- **ClientAction.Wallet.Remove** - this will contain the ID of the item to delete from the local secure wallet store. Inherent is that the server will have removed the corresponding decryption keys, rendering the item unusable.

### 7.3 - Advantages

This process has several key advantages:
- At no point after initial registration are the secure details available to Parts
- Secure details can be contained within a restricted software module without being passed through potentially insecure points
- There is no central database of secure details, removing risk of compromise
- Any compromise of the key database is effectively harmless - without a method to link key IDs back to users and the devices the encrypted data is held on, there is no security breach
- The lack of centrally stored details decreases requirements for security auditing and PCI certification

### 8 - Use Cases

### 8.1 - Transport ticketing

A complete transport ticketing system can be built using the following elements:
- Nodes for the provision of content and product information
- Parts for the handling of purchasing
- Digital tickets for fulfilment

### 8.1.1 - Construction

Core Engine's content management system is used to store a structure of Nodes providing categorised ticket types, with Node tags used to store:
- Style information such as logos and colour schemes for display in client apps
- Digital ticket information such as availability, pricing and valid routes

The user navigates this content and adds product items to their shopping basket, before submitting it using a Node.FormControls.Button. The handling Part calculates a total price and checked the validity of the products, and generates a summary, plus a secure wallet picker for the payment card, and a Node.FormControls.TextBox for the user's CV2 code. Another Node.FormControls.Button triggers a Part which sends the transaction information to a payment processor, and then presents the results to the user.

If the transaction was successful, it also logs a "Successful Purchase" activity, with the transaction details. A separate activity is logged for each ticket purchased, with its metadata containing the digital ticket ID, expiry date and time and other relevant details.

The client app then requests any new tickets, and a Core Engine Part sends back a structure of Nodes representing the generated tickets. The client device can then examine the Nodes' metadata to extract the properties detailed in "Properties and storage", and display the ticket's watermark for validation.

### 8.1.2 - Other applicable industries

This model is also applicable, with appropriate modifications for the use case, for:
- Event ticketing
- Conference centres

### 8.2 - Mobile shopping

A food pre-ordering solution can be built using:
- Nodes for the provision of content and product information
- Parts for the handling of purchasing
- Scheduled and Exposed Parts for integration with a point-of-sale system

### 8.2.1 - Construction

Core Engine's content management system is used to store a structure of Nodes providing categorised products, with Node tags used to store:
- Style information such as logos and colour schemes for display in client apps
- Product information such as stock levels, pricing and product codes

In this case, when the user chooses their order and checks-out, an order activity is logged, and the user is shown a digital receipt confirming their order.

Separately, a scheduled Part runs every 30 seconds, checking for new but unprocessed orders. The Part will pick up a batch of new orders and submit them using a third-party vendor's API, so that the merchant's POS system can send the order to the kitchen for preparation.

When the order is ready for collection, the POS system can submit an HTTP REST request back to another exposed Part, providing the order number and the new status as "Ready". That Part can then fetch the order details from the originally logged activity, look-up the user's details and send them a notification to tell them that their food is ready to collect.

### 8.2.2 - Other applicable industries

With minor changes to the fulfilment process - for example, using a digitally watermarked ticket as a proof-of-purchase - this is also applicable to:
- Retail goods ordering
- Vouchering and gifting
- Any mobile transactional process
- Hotel bookings
- Restaurant table booking

### 8.3 - Venue ticketing and information

In combination with the "Transport ticketing" and "Mobile shopping" for booking and entry, Core Engine can provide a complete solution for any venue with a fast-changing schedule of events.

### 8.3.1 - Construction

The system itself can be used to build and administration application for venue organisers. For each event scheduled, administrators can use their smartphones or web-admin systems to enter details of the upcoming event, including exhibitors, performances and so on.

Parts designed to process this input can generate Nodes from branded templates, populated with the given information to give the end result of a professional, well-presented source of visitor information for those attending.

Together with the "Mobile shopping" use case for merchants inside the venue, visitors can also be provided with mobile ordering and payment of refreshments and merchandising, cutting down on queues and delays during their visit.

### 8.4 - Live travel information

An integrated, live transport information system can draw multiple sources of data into one place. For example, a train operating company (TOC) may have IT systems providing information on various elements of their operation. Typically, these data will be functional and not designed for consumption by the general public.

The solution can make us of:
- Nodes for basic navigation
- Parts for data aggregation
- Location services for context-aware content

### 8.4.1 - Construction

At the top level of navigation, Nodes are used to provide navigation to a list of rail stations, current delays and other relevant information. On navigating to the list of stations, a Part will fetch PoI representing rail stations operated by the TOC, filtering using the user's location and namespace corresponding to the TOC. Navigating to the list of delays will trigger a Part which will fetch a list of delays from a network operations provider subcontracted by the TOC.

In both cases, navigating further will submit a Node alias (which will have a station code in its metadata tags) to a Part. That Part will extract the station code from the triggering Node, and perform several functions:
- Fetch the station location and generate a map Node (Node.GeoTag)
- Fetch full details of any delays on services through that station
- Fetch a list of upcoming arrivals and departures at the station from a second, different vendor's web service

Finally, it will build a Node structure to display all of this information intuitively, with appropriate icons indicting services running on time and those delayed, and send it all to the client app. Further detail may be provided to an even deeper level using the same techniques.

### 8.5 - Self-service Parking

Using the model pioneered by "pay by phone"-style operators, Core Engine can easily be configured to manage both sides of a self-service parking scheme, using:
- PoI to list parking locations
- Nodes for the payment UI
- Parts for the business logic
- Exposed Parts for optional voice-response telephone platform integration

### 8.5.1 - Construction

A set of Nodes provides a user interface allowing users to see a list of parking locations nearby their current position. On choosing their closest location, they are asked to enter a time period (in minutes, for example), and choose a payment method. Finally, they enter their car registration and their CV2 code, and payment is taken. An activity is logged for the parking payment, along with metadata recording the duration, expiry and customer's vehicle registration details.

Enforcement officers also have a UI accessed from parking authority-issued smartphones. The UI lists all of the paid-for vehicles nearby, also allowing search for a specific vehicle registration. If a given vehicle has not been paid for, the UI will also allow for a penalty to be sent by taking a photograph (potentially with a Node.FormControls.ImageUpload control) and triggering of a Part with a Button "click", sending an email to the enforcement office for further processing.

Finally, the same end-user-facing process can be provided by an automated telephone response system (IVR). Exposed Parts can provide data to an IVR API to submit parking and payment details by telephone, using caller ID to recognise the user and retrieve their payment details, before asking for the time period, location and CV2 code. SMS messages or other notifications can be sent to users when their time is near expiry, inviting them to extend parking by re-entering the UI once more.

### 8.6 - Ecosystem / Serendipity

Using the PoI handler system (see "PoI Handlers") and the results of analysis of logged activities, users may be presented on request with a list of various services which are either nearby or serendipitous to their recent behaviour.

Although simple as a concept, each item in this list can be a gateway to any of the use cases above (and a virtually infinite variety of others), and thus will be an ecosystem of interlinked services all accessible via one common user-interface. The user's experience will be a smooth and easy one, since their payment details will be on hand for any transactions they might need to pay for, and information about recent activity can be used in cross-promotions and in tailoring each service to direct the user to the information most applicable to their account profile.

Furthermore, various business clients of Corethree are able to work together to identify shared customers and promote mutually complementary services and products via the platform.

### 8.7 - Home / Facilities Automation

Core Engine can be used to unify disparate automation technologies in buildings or even regions, using:
- Nodes for structuring
- Scheduled Parts for monitoring
- Exposed Parts for outside notifications
- Parts for integration and control
- Activity logging for reporting and BI

### 8.7.1 - Construction

Users can use Core Engine's web-based administration system to configure systems available for control such as power management, weather monitoring, security and other systems. This process, which can pass information on new systems to Parts for configuration, will result in the generation of Nodes in the user's own services list, preconfigured to point to Node aliases to other Parts providing control functions.

When accessed, various UI workflows can trigger calls from Parts to outside systems connected via web services to do things like control lighting and entertainment systems, monitor security systems and report on power consumption. Scheduled Parts can automatically check current statistics and either act without intervention, or notify a user or users of the changes. Outside systems can themselves use exposed Parts to actively send data into Core Engine, potentially triggering another course of action on its own.

Finally, changes to outside systems can be logged as activities and reported on as with any other activity data, Examples might include:
- Keeping track of a security system and staff checking in and out of a building, with a Part validating access card IDs against security rights and logging all access for later graphing of arrival times
- Monitoring daily temperature readings for an industrial warehouse
- Notifying a homeowner when a security camera detects movement, and sending images plus FormControls to alert law enforcement
- Browsing media stored on a network storage device and controlling a "smart TV" to stream media in the home or boardroom

### 8.8 - B2B Mobilisation

All of the elements of Core Engine are available to mobilise services which Corethree's business customers already use. Examples of this include:
- Insurance brokers giving mobile access to their consultants, allowing them to take end-customer details on their smartphones and request quotes from their internal risk assessment systems via APIs accessed by Core Engine
- Live access to crucial business intelligence data by staff not otherwise in a position to use traditional desktop computer applications
- Shop-floor point-of-sale applications, using Core Engine to handle purchasing on off-the-shelf smartphones, and taking payment using any supported merchant payment provider
- Data collection, using Core Engine's activity logging and reporting features to collect large volumes of data from mobile workers and then provide details to managers by scheduling Parts to analyses and email regular reports
- Team communications, using rich Node content to send team feedback forms or data collection applications to a distributed workforce

### Appendix 1

This appendix describes the invention with reference to the drawings.

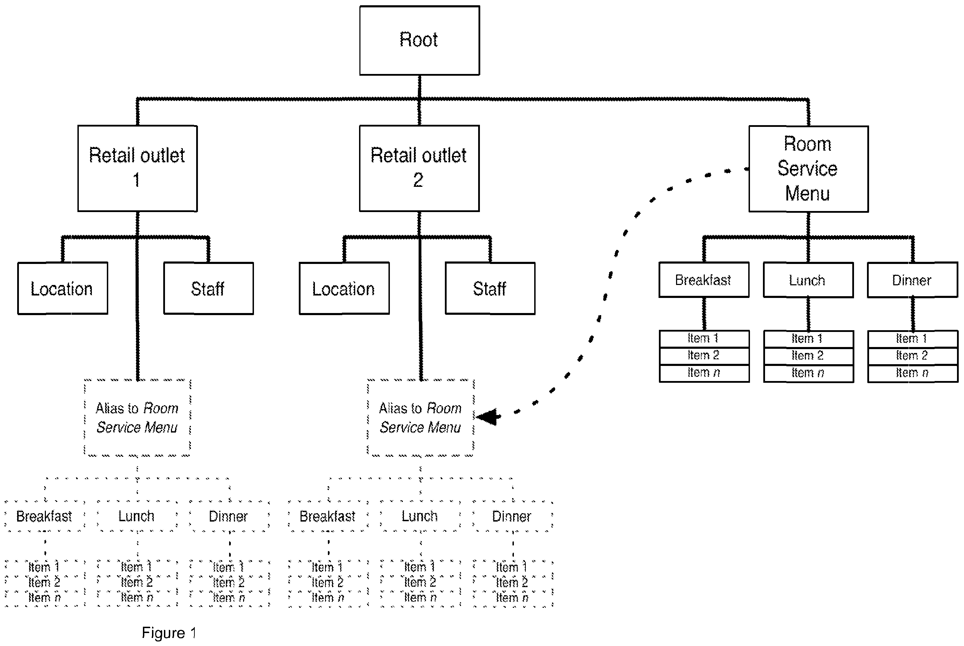

### Figure 1: Aliases in a tree of nodes

In this diagram, each outlined block is a Node, which when delivered to a device such as a smartphone may be displayed in a set of list-based navigation menus.

Retail outlets 1 and 2 are clients of the service provider. They each define their own information, including location and staff content which is specific to that particular location. However, the room service menu is a shared resource which both outlets have in common. In order to avoid duplication of data, and to allow administrators to manage just one set of content rather than two identical sets, two aliases are created as children of each of the retail outlet's main menu, both referring to the room service menu Node. When a client device requests the content for retail outlet 1, for example, Core Engine will resolve the alias, sending the client device the full tree including the segments indicated with dashed outlines. Thus, the user's perception will be of a single integrated tree of content, where each retail outlet appears to have its own room service menu.

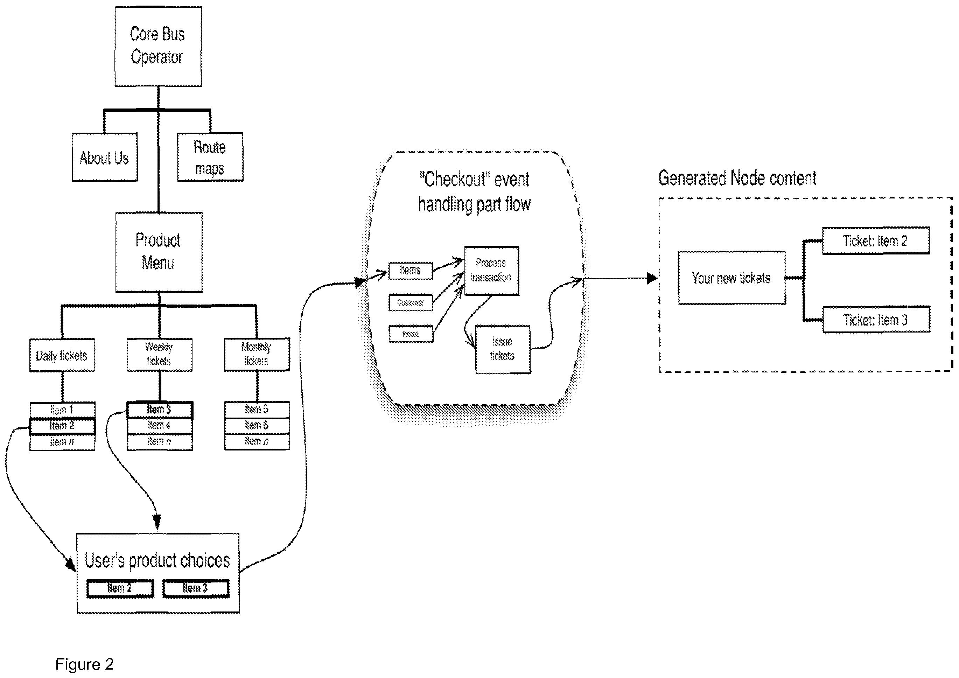

### Figure 2: How client devices can display node data

In this diagram, the top section illustrates a critical path from a root Node in a Core Engine content database to content up to six levels below the root. Each block represents a single Node, with the connections between blocks from left to right indicating a parent-child relationship. Note that one or more of the Nodes shown could potentially be the result of an Alias having been resolved by Core Engine before the complete tree was delivered to a client device.

The lower section illustrates the corresponding wireframe view that a user may see displayed on a mobile device's screen. Each screen is the practical rendering of the Node directly above it in the upper section. The illustration indicates that any path through a set of Nodes from root to any deep-level descendant may be navigated by a user in the form of hierarchical lists, which is an established and easily understood means for drilling-down through content of increasing specificity.

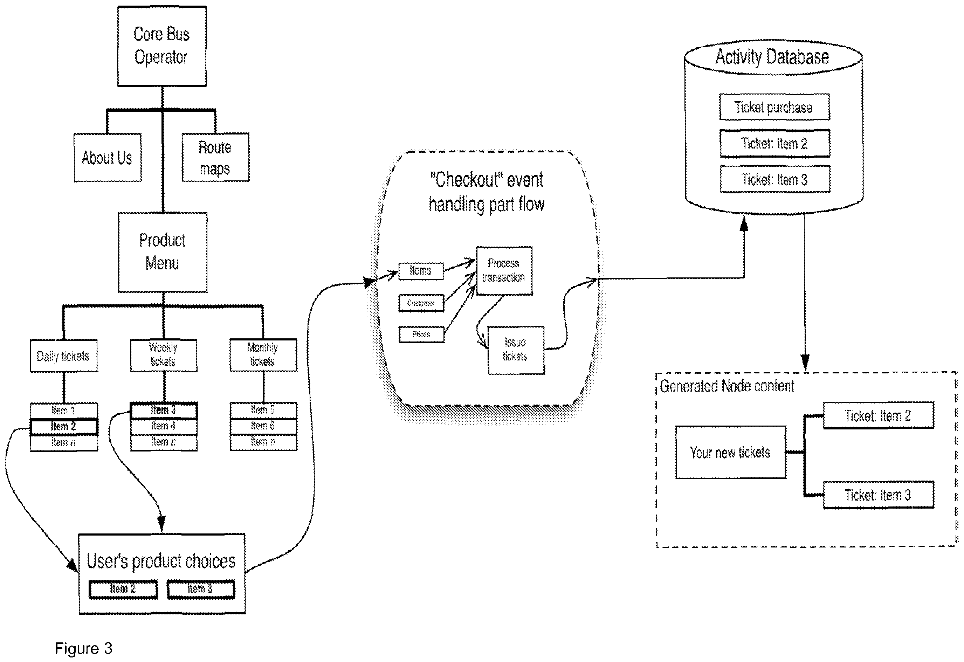

### Figure 3: Example ticket sales application

On the left of this diagram, a Node tree is defined, representing navigation and content related to a hypothetical bus operator using Core Engine. The data may be manually defined (by a member of an administration team), or generated elsewhere as a result of a Part being scheduled or otherwise triggered and that having imported data and produced the tree as a result.

In either case, a user will navigate through the content, drilling-down to ticket categories (e.g. "Daily tickets") and then individual product types (e.g. "Item 1", "Item 2"). After choosing their desired products using a shopping list-type mechanism on their device, the submit the choices back to Core Engine, which feeds those choices into the "Checkout" event handler Part flow. The Part flow gathers the shopping list, user details and product prices and executes a "Process transaction" Part, which in turn triggers an "Issue tickets" Part. That Part will log the ticket purchase, and an activity for each individual ticket - the log will include the user's details, payment method and ticket product details.

Finally, the Part flow will generate Node content for each logged ticket item, which may include content such as the digital watermark and expiry details. Client devices can request a full list of available tickets at any time, which will be re-generated from the activity log on demand.

## Claims

1. A system including a server and mobile phone computing devices, the mobile phone computing devices connected to the server via a network, the server including a platform configured to deliver content and services to the mobile phone computing devices, in which the content is stored as a database on the server, in which the platform stores content by arranging nodes in a hierarchical format that is capable of semantically representing content, with each node including a unique ID, and in which the hierarchical format acts as an abstraction layer that insulates a content or service creator and the connected mobile phone computing devices from being restricted (i) to any specific, predefined data format for the content or (ii) to any specific, predefined transport media for exchanging data over the network, **characterized in that** the services include digital distribution of tickets content to the mobile phone computing devices, including the platform providing digital tickets to the connected mobile phone computing devices for them to display, the displayed digital tickets including an animated watermark, wherein the animated watermark includes a timer indicating the time available to use the ticket.

2. The system of Claim 1, in which the data format is a generic format that is capable of representing many different types of semantic content.

3. The system of Claim 1 or 2 in which the unique ID is a unique number, or in which the unique ID is a GUID.

4. The system of Claim 1 or 2 in which the unique ID is a unique position in a tree hierarchy.

5. The system of any preceding Claim in which individual content entities are linked to a parent and one or more child nodes to enable semantic, hierarchical organisation of content.

6. The system of any preceding Claim in which individual content entities are linked to a parent and one or more child nodes to enable visual organisation and navigation of content within a user interface in a development environment.

7. The system of any preceding Claim in which a node includes a property defining how long each connected mobile phone computing device may store that node before requesting fresh content.

8. The system of any preceding Claim in which a node is defined by a type which identifies the kind of content the node contains, where types are hierarchically organised in a range of types, so that if a connected mobile phone computing device is compatible with a specific type, then it can use all the properties of that type, but if it is not compatible with that type then it reverts to a simpler, higher-level type with properties that it can use.

9. The system of any preceding Claim in which a node includes a property which defines that it is a placeholder or alias to another node, to enable re-use of common content structures.

10. The system of any preceding Claim in which a node includes a property which defines that it is a placeholder or alias to another node, to enable multiple branches of a hierarchical tree of nodes to make use of a single set of nodes without duplication of data, to reduce bandwidth used by connected mobile phone devices retrieving these nodes.

11. The system of any preceding Claim in which meta-data may be inherited by children of the node with the addition of a flag upon an individual item of meta-data indicating that it should be inherited by descendants.

12. The system of any preceding Claim, in which the platform responds to requests from client-based applications running on the mobile phone computing devices connected to the server via the network, the request using standards-based protocols such as HTTP or Protocol Buffers.

13. The system of any preceding Claim in which the services include live information aggregated from the internet.

14. The system of any preceding Claim, in which the animated watermark indicates that the digital ticket is validly available for use.

15. The system of any preceding Claim, in which the mobile phone computing devices are smartphones.

16. A computer-implemented method of providing content and services from a server to mobile phone computing devices, the mobile phone computing devices connected to the server via a network, the server including a platform, in which the method includes the steps of
(a) using the platform that stores content by arranging nodes in a hierarchical data format that is capable of semantically representing content, with each node including a unique ID and in which the hierarchical format acts as an abstraction layer that insulates a content or service creator and the connected mobile phone computing devices from being restricted (i) to any specific, predefined data format for the content or (ii) to any specific, predefined transport media for exchanging data over the network, and
(b) the platform delivering content and services to the mobile phone computing devices, in which the content is stored as a database on the server, **characterized in that** the services include digital distribution of tickets content to the mobile phone computing devices, including the platform providing digital tickets to the connected mobile phone computing devices for them to display, the displayed digital tickets including an animated watermark, wherein the animated watermark includes a timer indicating the time available to use the ticket.

## Patentansprüche

1. System, das einen Server und Mobiltelefonrechenvorrichtungen beinhaltet, wobei die Mobiltelefonrechenvorrichtungen mit dem Server über ein Netzwerk verbunden sind, wobei der Server eine Plattform beinhaltet, die dazu konfiguriert ist, Inhalte und Dienste an die Mobiltelefonrechenvorrichtungen zu liefern, wobei die Inhalte als eine Datenbank auf dem Server gespeichert werden, wobei die Plattform Inhalte durch Anordnen von Knoten in einem hierarchischen Format speichert, das zur semantischen Darstellung von Inhalten fähig ist, wobei jeder Knoten eine eindeutige ID beinhaltet und wobei das hierarchische Format als eine Abstraktionsschicht fungiert, die einen Inhalts- oder Dienstersteller und die verbundene Mobiltelefonrechenvorrichtungen davor bewahrt, auf Folgendes beschränkt zu sein: (i) ein beliebiges spezifisches, vordefiniertes Datenformat für die Inhalte oder (ii) ein beliebiges spezifisches, vordefiniertes Transportmedium zum Austauschen von Daten über das Netzwerk, **dadurch gekennzeichnet, dass** die Dienste digitale Verteilung von Ticketinhalten an die Mobiltelefonrechenvorrichtungen beinhalten, was beinhaltet, dass die Plattform die digitalen Tickets den verbundenen Mobiltelefonrechenvorrichtungen zur Anzeige bereitstellt, wobei die angezeigten digitalen Tickets ein animiertes Wasserzeichen beinhalten, wobei das animierte Wasserzeichen einen Timer beinhaltet, der die zur Verwendung des Tickets verfügbare Zeit angibt.

2. System nach Anspruch 1, wobei das Datenformat ein generisches Format ist, das dazu fähig ist, viele verschiedene Arte von semantischen Inhalten darzustellen.

3. System nach Anspruch 1 oder 2, wobei die eindeutige ID eine eindeutige Zahl ist oder wobei die eindeutige ID eine GUID ist.

4. System nach Anspruch 1 oder 2, wobei die eindeutige ID eine eindeutige Position in einer Baumhierarchie ist.

5. System nach einem der vorangehenden Ansprüche, wobei individuelle Inhaltseinheiten mit einem Eltern- und einem oder mehren Kindknoten verbunden sind, um semantische, hierarchische Organisation von Inhalten zu ermöglichen.

6. System nach einem der vorangehenden Ansprüche, wobei individuelle Inhaltseinheiten mit einem Eltern- und einem oder mehreren Kindknoten verbunden sind, um visuelle Organisation und Navigation von Inhalten in einer Benutzerschnittstelle in einer Entwicklungsumgebung zu ermöglichen.

7. System nach einem der vorangehenden Ansprüche, wobei ein Knoten eine Eigenschaft beinhaltet, die definiert, wie lange jede verbundene Mobiltelefonrechenvorrichtung diesen Knoten speichern kann, bevor sie neue Inhalte anfordert.

8. System nach einem der vorangehenden Ansprüche, wobei ein Knoten durch einen Typ definiert ist, der die Art von Inhalten, die der Knoten enthält, identifiziert, wobei Typen in einer Reihe von Typen hierarchisch organisiert sind, sodass, wenn eine verbundene Mobiltelefonrechenvorrichtung mit einem spezifischen Typ kompatibel ist, sie alle Eigenschaften dieses Typs verwenden kann, aber wenn sie nicht mit diesem Typ kompatibel ist, sie auf einen einfacheren Typ auf einer höheren Ebene mit Eigenschaften, die sie verwenden kann, zurückgreift.

9. System nach einem der vorangehenden Ansprüche, wobei ein Knoten eine Eigenschaft beinhaltet, die definiert, dass er ein Platzhalter oder Alias für einen anderen Knoten ist, um die Wiederverwendung häufiger Inhaltsstrukturen zu ermöglichen.

10. System nach einem der vorangehenden Ansprüche, wobei ein Knoten eine Eigenschaft beinhaltet, die definiert, dass er ein Platzhalter oder Alias für einen anderen Knoten ist, um mehreren Zweigen eines hierarchischen Baums von Knoten zu ermöglichen, einen einzigen Satz von Knoten ohne Duplikation von Daten zu verwenden, um von verbundenen Mobiltelefonvorrichtungen, die diese Knoten abrufen, genutzte Bandbreite zu reduzieren.

11. System nach einem der vorangehenden Ansprüche, wobei Metadaten von Kindern des Knotens unter Hinzufügung eines Flags zu einem einzelnen Element der Metadaten, das anzeigt, dass es von abhängigen Elementen übernommen werden soll, übernommen werden können.

12. System nach einem der vorangehenden Ansprüche, wobei die Plattform auf Anforderungen von clientbasierten Anwendungen, die auf den Mobiltelefonrechenvorrichtungen, die mit dem Server über das Netzwerk verbunden sind, ausgeführt werden, reagiert, wobei die Anforderung standardbasierte Protokolle, wie etwa HTTP oder Protocol Buffers, verwendet.

13. System nach einem der vorangehenden Ansprüche, wobei die Dienste aus dem Internet aggregierte Live-Informationen beinhalten.

14. System nach einem der vorangehenden Ansprüche, wobei das animierte Wasserzeichen angibt, dass das digitale Ticket gültig zur Verwendung verfügbar ist.

15. System nach einem der vorangehenden Ansprüche, wobei die Mobiltelefonrechenvorrichtungen Smartphones sind.

16. Computerimplementiertes Verfahren zum Bereitstellen von Inhalten und Diensten von einem Server an Mobiltelefonrechenvorrichtungen, die mit dem Server über ein Netzwerk verbunden sind, wobei der Server eine Plattform beinhaltet, wobei das Verfahren die Folgende Schritte beinhaltet
(a) Verwenden der Plattform, die Inhalte durch Anordnen von Knoten in einem hierarchischen Datenformat speichert, das zur semantischen Darstellung von Inhalten fähig ist, wobei jeder Knoten eine eindeutige ID beinhaltet und wobei das hierarchische Format als eine Abstraktionsschicht fungiert, die einen Inhalts- oder Dienstersteller davor bewahrt, auf Folgendes beschränkt zu sein: (i) ein beliebiges spezifisches, vorbestimmtes Datenformat für die Inhalte oder (ii) ein beliebiges spezifisches, vordefiniertes Transportmedium zum Austauschen von Daten über das Netzwerk, und
(b) Liefern von Inhalten und Diensten durch die Plattform an die Mobiltelefonrechenvorrichtungen, wobei die Inhalte als eine Datenbank auf dem Server gespeichert werden, **dadurch gekennzeichnet, dass** die Dienste digitale Verteilung von Ticketinhalten an die Mobiltelefonrechenvorrichtungen beinhalten, was beinhaltet, dass die Plattform digitale Tickets an die verbundenen Mobiltelefonrechenvorrichtungen zur Anzeige bereitstellt, wobei die angezeigten digitalen Tickets ein animiertes Wasserzeichen beinhalten, wobei das animierte Wasserzeichen einen Timer beinhaltet, der die zur Verwendung des Tickets verfügbare Zeit angibt.

## Revendications

1. Système comprenant un serveur et des dispositifs informatiques de téléphonie mobile, les dispositifs informatiques de téléphonie mobile étant connectés au serveur par l'intermédiaire d'un réseau, le serveur comprenant une plateforme configurée pour livrer des contenus et des services aux dispositifs informatiques de téléphonie mobile, dans lesquels les contenus sont stockés comme base de données sur le serveur, dans lequel la plateforme stocke des contenus en agençant des nœuds dans un format hiérarchique capable de représenter sémantiquement des contenus, chaque nœud comprenant un ID unique, et dans lequel le format hiérarchique agit comme couche d'abstraction qui évite qu'un créateur de contenus ou de services et que les dispositifs informatiques de téléphonie mobile soient restreints (i) à un quelconque format de données prédéfini spécifique pour les contenus ou (ii) à un quelconque support de transport prédéfini spécifique pour échanger des données sur le réseau, **caractérisé en ce que** les services comprennent une distribution numérique de contenus de tickets aux dispositifs informatiques de téléphonie mobile, comprenant la fourniture, par la plateforme, de tickets numériques aux dispositifs informatiques de téléphonie mobile connectés afin qu'ils les affichent, les tickets numériques affichés comprenant un filigrane animé, dans lequel le filigrane animé comprend un chronomètre indiquant le temps disponible pour utiliser le ticket.

2. Système selon la revendication 1, dans lequel le format de données est un format générique capable de représenter de nombreux types différents de contenus sémantiques.

3. Système selon la revendication 1 ou 2, dans lequel l'ID unique est un nombre unique, ou dans lequel l'ID unique est un format d'identificateur globalement unique (GUID).

4. Système selon la revendication 1 ou 2, dans lequel l'ID unique est une position unique dans une hiérarchie arborescente.

5. Système selon une quelconque revendication précédente, dans lequel des entités de contenus individuelles sont liées à un nœud parent et à un ou à plusieurs nœuds enfants afin de permettre l'organisation sémantique et hiérarchique des contenus.

6. Système selon une quelconque revendication précédente, dans lequel les entités de contenus individuelles sont liées à un nœud parent et à un ou à plusieurs nœuds enfants afin de permettre l'organisation et la navigation visuelles de contenus dans une interface utilisateur dans un environnement de développement.

7. Système selon une quelconque revendication précédente, dans lequel un nœud comprend une propriété définissant combien de temps chaque dispositif informatique de téléphonie mobile connecté peut stocker ce nœud avant de demander des contenus actualisés.

8. Système selon une quelconque revendication précédente, dans lequel un nœud est défini par un type qui identifie le type de contenus que le nœud contient, où les types sont hiérarchiquement organisés dans une gamme de types, de sorte que, si un dispositif informatique de téléphonie mobile connecté est compatible avec un type spécifique, alors il peut utiliser toutes les propriétés de ce type, mais s'il n'est pas compatible avec ce type, alors il retombe à un type de plus haut niveau plus simple avec les propriétés qu'il peut utiliser.

9. Système selon une quelconque revendication précédente, dans lequel un nœud comprend une propriété qui définit qu'il s'agit d'un paramètre substituable ou d'un pseudo vers un autre nœud, afin de permettre la réutilisation de structures de contenus communes.

10. Système selon une quelconque revendication précédente, dans lequel un nœud comprend une propriété qui définit qu'il s'agit d'un paramètre substituable ou d'un pseudo vers un autre nœud, afin de permettre à de multiples branches d'une arborescence hiérarchique de nœuds de faire usage d'un ensemble unique de nœuds sans duplication des données, pour réduire la largeur de bande utilisée par les dispositifs de téléphonie mobile connectés récupérant ces nœuds.

11. Système selon une quelconque revendication précédente, dans lequel les métadonnées peuvent être transmises aux enfants du nœud avec l'ajout d'un drapeau sur un article individuel de métadonnées indiquant qu'il doit être transmis aux descendants.

12. Système selon une quelconque revendication précédente, dans lequel la plateforme répond à des demandes provenant d'applications basées client exécutées sur les dispositifs informatiques de téléphonie mobile connectés au serveur par l'intermédiaire du réseau, la demande utilisant des protocoles à base de normes tels que HTTP ou Protocol Buffers.

13. Système selon une quelconque revendication précédente, dans lequel les services comprennent des informations en direct agrégées à partir d'internet.

14. Système selon une quelconque revendication précédente, dans lequel le filigrane animé indique que le ticket numérique est disponible de manière valide pour utilisation.

15. Système selon une quelconque revendication précédente, dans lequel les dispositifs informatiques de téléphonie mobile sont des smartphones.

16. Procédé mis en œuvre par ordinateur pour fournir des contenus et des services d'un serveur à des dispositifs informatiques de téléphonie mobile, les dispositifs informatiques de téléphonie mobile étant connectés au serveur par l'intermédiaire d'un réseau, le serveur comprenant une plateforme, dans lequel le procédé comprend les étapes
(a) d'utilisation de la plateforme qui stocke des contenus en agençant des nœuds dans un format de données hiérarchique capable de représenter sémantiquement des contenus, chaque nœud comprenant un ID unique et dans lequel le format hiérarchique agit comme couche d'abstraction qui évite qu'un créateur de contenus ou de services et que les dispositifs informatiques de téléphonie mobile soient restreints (i) à un quelconque format de données prédéfini spécifique pour les contenus ou (ii) à un quelconque support de transport prédéfini spécifique pour échanger des données dans le réseau, et
(b) de livraison, par la plateforme, de contenus et de services aux dispositifs informatiques de téléphonie mobile, dans lesquels les contenus sont stockés comme base de données sur le serveur, **caractérisé en ce que** les services comprennent une distribution numérique de contenus de tickets aux dispositifs informatiques de téléphonie mobile, comprenant la fourniture, par la plateforme, de tickets numériques aux dispositifs informatiques de téléphonie mobile connectés afin qu'ils les affichent, les tickets numériques affichés comprenant un filigrane animé, dans lequel le filigrane animé comprend un chronomètre indiquant le temps disponible pour utiliser le ticket.
